# EUROPEAN PATENT SPECIFICATION

(11) **EP 3 638 729 B1**
(45) Date of publication and mention of the grant of the patent: **09.04.2025**
(21) Application number: 18729127.3
(22) Date of filing: 08.06.2018
(51) Int. Cl.: C08L 23/12

(54) **POLYOLEFIN COMPOSITION WITH REDUCED ODOR AND FOGGING**
POLYOLEFINZUSAMMENSETZUNG MIT VERRINGERTEM GERUCH UND VERRINGERTER TRÜBUNG
COMPOSITION DE POLYOLÉFINE À ODEUR ET FORMATION DE BUÉE RÉDUITES

(30) Priority: 13.06.2017 EP 17175795
(43) Date of publication of application: 22.04.2020
(73) Proprietor: Basell Poliolefine Italia S.r.l., 20121 Milano (IT)
(72) Inventor: ROHRMANN, Jürgen, 65779 Kelkheim (DE); DUREEV, Mikhail Sergeevich, 35510 Butzbach (DE)
(74) Representative: LyondellBasell
(86) International application number: PCT/EP2018/065108
(87) International publication number: WO 2018/228929

(56) References cited:
- EP-A2- 0 361 087
- US-A- 5 928 745
- US-A1- 2010 247 826

## Description

### FIELD OF THE INVENTION

The present disclosure is directed to polyolefin compositions comprising cyclodextrin for use in the production of molded articles such as water pipes and articles for use in the automotive and packaging industries.

### BACKGROUND OF THE INVENTION

Original equipment manufacturers (OEMs) especially in the automotive industry have rigorous odor specifications on all interior applications and heating and air conditioning units (HVAC).

The most common method to determine odor is VDA 270, in which a sample of the material is heated in a small closed flask and then a qualified group of people perform an odor detection test. The ranking is made on a scale from 1 (no smell) to 6 (extremely high odor). Most OEMs have set the limits for odor at less than 3, but it is almost impossible to reach this value with most commercial polypropylene compounds. Due to the high requirements for long term heat stability, UV resistance, scratch performance, surface quality, haptics and mechanical properties in automobiles many special additives and fillers are used which adversely contribute to smell.

Recently some special additives and methods have been developed to reduce the odor.

One type is referred to as "stripping" additives, which remove volatile organic substances during compounding, but these are not very efficient and have a very negative impact on long term heat stability, UV resistance and scratch performance, because also the content of additives needed for these properties are partially removed.

Another type of additive, known as "absorbers," reduce odor by absorbing molecules causing odor on big inner surfaces. However, these compounds are likewise inefficient and they negatively impact overall performance.

Odor reduction processes may involve the optimization of compounding and injection molding conditions by adjusting the manufacturing parameters. However, such processes have very limited efficacy and increase the cost for compounding and injection molding due to lower throughput and higher cycle times.

An additional consideration for OEMs relates to the prevention or reduction of fogging. The term "fogging" primarily refers to the evaporation of volatile components of polymers, textiles and leather, which are extensively used in the automotive industry.

High temperatures can cause the volatile components to evaporate and condense in fine droplets on the internal surfaces, including the windscreen, thereby impairing the driver's view and causing dangerous driving conditions.

At the same time the materials used become more brittle and harder as the volatile components evaporate resulting in material fatigue and premature aging.

Many methods for reducing fogging have been reported and are primarily aimed at lowering the surface tension of the substrate itself (see, *e.g.* JP Pat. Docs. JP 2003/238207 and JP2001/356201) or that of a water-absorptive compound, by treatment with a water-repellent compound, by nanostructuring the surface (see, *e.g.* US 2014/0272295 A1) or by warming the substrate itself.

All of these solutions require additional effort and cost such as the application of a coating on the finished article or additional steps in the production or installation of the article.

Thus there is a need to produce polyolefin compositions having improved odor and fogging properties that maintain suitable material properties and cost.

### SUMMARY OF THE INVENTION

The present disclosure relates to a polyolefin composition according to claim 1 having reduced odor. Furthermore, the composition according to claim 1 has reduced fogging. It also provides a molded article according to claim 10. Furthermore, the use of said composition in an injection molding process is claimed according to claim 12.

The polyolefin composition of the present disclosure comprises: (A) at least one polyolefin;(B) from 3.0 to 40.0% by weight of a filler selected from the group consisting of fibers, metallic flakes, glass flakes, milled glass, glass spheres, mineral fillers, barium sulfate, metal oxides and hydroxides, wood flour and mixtures thereof; and(C) from 0.1 to 2.5% by weight of at least one cyclodextrin,the sum (A) + (B) + (C) being 100. While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the detailed description is to be incorporated as illustrative in nature and not restrictive.

### DETAILED DESCRIPTION OF THE INVENTION

Preferably, component (A) comprises at least one polypropylene. A polypropylene can be a propylene homopolymer, a heterophasic propylene copolymer, a random propylene copolymer or a mixture thereof, more preferably component (A) comprises at least one heterophasic propylene copolymer or at least one polypropylene homopolymer or a mixture thereof.

Heterophasic propylene copolymers comprise a matrix being either a propylene homopolymer or a random propylene copolymer in which an amorphous phase, which contains a propylene ethylene copolymer rubber (elastomer), is dispersed. Thus the polypropylene matrix contains dispersed inclusions not being part of the matrix and said inclusions contain the elastomer. The term inclusion indicates that the matrix and the inclusion form different phases within the heterophasic propylene. Further the heterophasic polypropylene may contain to some extent a crystalline polyethylene, which is a by-reaction product obtained by the preparation of the heterophasic propylene copolymer. Such crystalline polyethylene is present as inclusion of the amorphous phase due to thermodynamic reasons.

Preferably, component (A) comprises:
(A1) from 60.00 to 100%, preferably from 65.00 to 85.00% by weight of at least one heterophasic propylene copolymer or at least a polypropylene homopolymer or a mixture thereof;
(A2) from 0 to 25.00%, preferably from 1.00 to 8.00% by weight of one or more polyethylenes, preferably a high density polyethylene having density ranging from 0.93 up to 0.97 g/cm³;
(A3) from 0 to 15.00 wt%, preferably from 5.00 to 10.00% by weight of one or more copolymers of ethylene and one monomer selected from 1-butene, 1-hexene or 1-octene containing from 15 wt% to 60 wt% preferably from 20 wt% to 40 wt% more preferably from 25 wt% to 35 wt% of 1-butene or 1-octene derived units; said copolymer having preferably a MFR (measured at 190 °C, 2.16 kg load) comprised between 0.5 g/10 min and 35.0 g/10 min; preferably from 1.0 g/10 min and 10.0 g/10 min, the sum (A1) + (A2) + (A3) being 100.

Cyclodextrins (CDs) are cyclic oligomers of glucose, which generally belong to the class of compounds known as oligosaccharides, formed by enzymes such as cyclodextrin glycosyltransferase (CGTase), which may contain 6, 7, or 8 glucose monomers joined by alpha-1,4 linkages. These oligomers are commonly called α-cyclodextrin (α-CD), β-cyclodextrin (β-CD), and γ-cyclodextrin (γ-CD), respectively. Each glucose unit has three hydroxyl groups each at the 2, 3, and 6 positions. Hence, α-CD has 18 hydroxyls or 18 substitution sites available and may have a maximum degree of substitution (DS) of 18. Similarly, β-CD and γ-CD have a maximum DS of 21 and 24, respectively.

The most stable three-dimensional molecular configuration for these oligosaccharides is referred to as a "toroid," a doughnut or coil-like (torus) shape with the smaller and larger openings of the toroid presenting primary and secondary hydroxyl groups. The specific coupling of the glucose monomers gives the CD molecule a rigid, truncated conical molecular structure with a hollow interior of a specific volume.

This internal cavity, which is lipophilic, *i.e.* attractive to hydrocarbon materials when compared to the exterior surface, is a key structural feature of cyclodextrin, providing the ability to complex molecules (*e.g*., aromatics, alcohols, halides, hydrogen halides, carboxylic acids, esters, *etc*.). The complexed molecule must generally satisfy the size criterion of at least partially fitting into the cyclodextrin internal cavity for forming an inclusion complex.

Within the present disclosure, among cylodextrins, β-cyclodextrin, methylated β-cyclodextrin and a mixture between β-cyclodextrin and methylated β-cyclodextrin are preferred.

A filler (B) can also be comprised in the composition. The filler can be organic or inorganic.

Preferred are fibers, both organic and inorganic, and the other inorganic fillers (different from fibers), such as metallic flakes, glass flakes, milled glass, glass spheres and mineral fillers, like talc, calcium carbonate, mica, wollastonite or silicates in general, kaolin, barium sulfate, metal oxides and hydroxides such as magnesium hydroxide, or a mixture of these.

Fibers for the present compositions include fibers made of glass, metal, ceramic, graphite, and organic polymers such as polyesters and nylons, *e.g.,* aramids, in filamentary form, all of which are commercially available.

Another suited filler is wood flour, alone or in mixture with the other types of fillers.

Preferred fillers are talc and glass fibers.

Glass fibers may be either milled or chopped short glass fibers or long glass fibers, or may be in the form of continuous filament fibers, although preference is given to using chopped glass fibers, also known as short glass fibers or chopped strands.

The composition can comprise a compatibilizer.

A compatibilizer is a component capable of improving the interfacial properties between fillers and polymers by reducing the interfacial tension between the two, while simultaneously reducing the agglomeration tendency of filler particles, thus improving their dispersion within the polymer matrix.

One type which can be used as compatibilizer are low molecular weight compounds having reactive polar groups which increases the polarity of polyolefin and are intended to react with the functionalized coating or sizing of the fillers, if present, to enhance the compatibility with the polyolefin itself. Suitable functionalizing groups for the fillers are, for example, silanes such as aminosilanes, epoxysilanes, amidosilanes and acrylosilanes, more preferably an aminosilane.

However, the compatibilizers preferably comprise a polymer modified (functionalized) with polar moieties and, optionally, a low molecular weight compound having reactive polar groups. Modified olefin polymers, in particular propylene homopolymers and copolymers, like copolymers of ethylene and propylene with optionally other alpha olefins, are most preferred. Modified polyethylene or polybutene can be used as well.

In terms of structure, the modified polymers are preferably selected from graft or block copolymers. In this context, preference is given to modified polymers containing groups deriving from polar compounds, in particular selected from acid anhydrides, carboxylic acids, carboxylic acid derivatives, primary and secondary amines, hydroxyl compounds, oxazoline and epoxides, and also ionic compounds.

Specific examples of the said polar compounds are unsaturated cyclic anhydrides and their aliphatic diesters, and the diacid derivatives. In particular, one can use maleic anhydride and compounds selected from C₁-C₁₀ linear and branched dialkyl maleates, C₁-C₁₀ linear and branched dialkyl fumarates, itaconic anhydride, C₁-C₁₀ linear and branched itaconic acid dialkyl esters, maleic acid, fumaric acid, itaconic acid and mixtures thereof.

The compatibilizer can be used in an amount ranging from 0.1 up to 5.0 wt% with respect to the sum (A) + (B).

Preferably, the amount of groups deriving from polar compounds in the modified polymers ranges from 0.3 to 3% by weight, more preferably from 0.3 to 1.5 wt%.

Preference is given to the use of a propylene polymer grafted with maleic anhydride as compatibilizer.

Preferably, if the filler is a glass fiber, the composition further comprises a compatibilizer, said compatibilizer being a propylene polymer grafted with maleic anhydride.

The composition of the present disclosure can be used for the production of injection molded articles, including but not limited to automotive articles, pipes and fibers for textile applications.

The following examples are given to illustrate the present disclosure without any limiting purpose.

### Measurement methods

The characterization data for the compositions of the disclosure were obtained according to the following methods:

### Melt flow rate (MFR)

Determined according to ISO 1133 (230 °C, 2.16 kg), unless otherwise specified.

### Melt volume rate (MVR)

Determined according to ISO 1133 (230 °C, 2.16 kg).

### Ash content

Determined according to ISO 3451/1, 1 hour at 625 °C.

### Flexural modulus, flexural strength at 3.5%, strain, flexural strength at yield, elongation at flexural strength

Determined according to ISO method 178 on rectangular specimens (80 x 10 x 4 mm) from T-bars (ISO 527-1, Type 1A).

### Tensile modulus, tensile stress at yield, tensile strength, tensile stress at break, elongation at break

Determined according to ISO method 178 on rectangular specimens (80 x 10 x 4 mm) from T-bars (ISO 527-1, Type 1A).

### Charpy impact test

Determined according to ISO 179/1eU and /1eA on rectangular specimens (80 x 10 x 4 mm) from T-bars (ISO 527-1, Type 1A).

### C-Emission

Determined on granules according to VDA 277.

### Volatile organic compounds (VOCs)

VOC amounts (highly and medium volatile compounds) were determined according to VDA 278.

### FOG

FOG (low volatile compounds) were determined according to VDA 278.

### Long-term heat stability

Determined at 150 °C according to IEC 60216/4 (VW 44045).

### Fogging

Determined according to DIN 75201 with the gravimetric method (DIN 75201/B).

### Odor

Odor was established according to VDA 270 by two panels of people. The rating is based on a scale from 1 (no smell) to 6 (extremely high odor).

### T-bar preparation (injection molded)

Determined according to ISO 1873-2 (1989).

### Examples

All compositions described in the examples were produced with a Krupp Werner & Pfleiderer/1973, ZSK 53 twin-screw extruder (screw diameter: 2 x 53, 36D; screw rotation speed of 150 rpm; melt temperature of 230 °C).

### Example 1 - PP composition with talc

The composition was built up with:
- 28.00 wt% of a commercial heterophasic polypropylene (PP heco 1, C₂ content of 5.4 wt%, MFR 18 g/10 min, LyondellBasell Industries);
- 28.00 wt% of a commercial heterophasic polypropylene (PP heco 2, C₂ content of 10.0 wt%, MFR 70 g/10 min, LyondellBasell Industries);
- 20.00 wt% of Steamic T1 C A talc from IMERYS (hydrated magnesium silicate, d50 (Sedigraph 5100) = 2.0, lamellarity index = 1.8));
- 11.00 wt% of an ethylene/1-butene plastomer (Engage^{™} 7467, The Dow Chemical Company);
- 6.00 wt% of a commercial high density polyethylene (HDPE, MFR (190 °C/2.16 kg) = 14 g/10 min, LyondellBasell Industries);
- 2.65 wt% of a of a commercial polypropylene homopolymer (PP homo 1, MFR = 10 g/10 min, LyondellBasell Industries);
- 0.50 wt% of β-cyclodextrin (CAVAMAX^{®} W7, Wacker Chemie);
- 3.85 wt% of a standard additive package constituted by 0.15 wt% of magnesium oxide (Magnesium Oxide Remag AC, Spaeter), 0.20 wt% of HALS stabilizer (Cyasorb^{®} UV-3853 S, Cytec), 0.50 wt% of GMS (Dimodan^{®} HP, Danisco), 0.50 wt% of erucamide (Kemamide^{®} EZ powder, PMC Biogenix Inc.), 0.40 wt% of antioxidants (0.20 wt% of Irgafos^{®} 168 and 0.20 wt% of Irganox^{®} 1010, BASF), 2.00 wt% of a carbon black masterbatch, 40% by weight in polypropylene (BK MB - PP MB, 40% black, Polyplast Müller) and 0.10 wt% polar wax (Licowax^{®} OP powder, Clariant) with respect to the total amount of the composition.

### Example 2 - PP composition with talc

The composition of Example 2 was built up with the same components and amounts as Example 1, except that the concentration of commercial polypropylene homopolymer (MFR = 10 g/10 min) was 2.15 wt%, and the CAVAMAX^{®} W7 β-cyclodextrin concentration was 1.00 wt%.

### Example 3 - PP composition with talc

The composition of Example 3 was built up with the same components and amounts as Example 1, except that the cyclodextrin used was CAVASOL^{®} W7 M methyl-β-cyclodextrin from Wacker Chemie.

### Example 4 - PP composition with talc

The composition of Example 4 was built up with the same components and amounts as Example 3, except that the concentration of commercial polypropylene homopolymer (MFR = 10 g/10 min) was 2.15 wt%, and the CAVASOL^{®} W7 M methyl-β-cyclodextrin concentration was 1.00 wt%.

### Example 5 - PP composition with talc

The composition of Example 5 was built up with the same components and amounts as Example 3 except that the concentration of the commercial polypropylene homopolymer (MFR = 10 g/10 min) was 2.15 wt% and, instead of 1.00 wt% of CAVASOL W7 M methyl-β-cyclodextrin, 0.05 wt% of CAVAMAX W7 β-cyclodextrin and 0.05 wt% of CAVASOL W7 M methyl-β-cyclodextrin were used.

### Comparative Example 1 - PP composition with talc

The composition of Comparative Example 1 was built up with the same components and amounts as Example 1 except that the concentration of the commercial polypropylene homopolymer (MFR = 10 g/10 min) was 3.15 wt%, and no cyclodextrins were present.

The compositions of Examples 1-5 and Comparative Example 1 are reported in Table 1.

**Table 1**

| | | Comp Ex 1 | Ex 1 | Ex 2 | Ex 3 | Ex 4 | Ex 5 |
|---|---|---|---|---|---|---|---|
| PP heco 1 | [wt%] | 28.00 | 28.00 | 28.00 | 28.00 | 28.00 | 28.00 |
| PP heco 2 | [wt%] | 28.00 | 28.00 | 28.00 | 28.00 | 28.00 | 28.00 |
| Talc | [wt%] | 20.00 | 20.00 | 20.00 | 20.00 | 20.00 | 20.00 |
| Engage 7467 | [wt%] | 11.00 | 11.00 | 11.00 | 11.00 | 11.00 | 11.00 |
| HDPE | [wt%] | 6.00 | 6.00 | 6.00 | 6.00 | 6.00 | 6.00 |
| PP homo 1 | [wt%] | 3.15 | 2.65 | 2.15 | 2.65 | 2.15 | 2.15 |
| CAWAMAX W7 | [wt%] | 0 | 0.50 | 1.00 | 0 | 0 | 0.50 |
| CAWASOL W7 M | [wt%] | 0 | 0 | 0 | 0.50 | 1.00 | 0.50 |
| Additive package | [wt%] | 3.85 | 3.85 | 3.85 | 3.85 | 3.85 | 3.85 |

The properties of Examples 1-5 and Comparative Example 1 are reported in Table 2.

**Table 2**

| | | Comp Ex 1 | Ex 1 | Ex 2 | Ex 3 | Ex 4 | Ex 5 |
|---|---|---|---|---|---|---|---|
| MFR | [g/10 min] | 18.6 | 18.8 | 18.4 | 17.7 | 17.1 | 17.8 |
| MVR | [g/10 min] | 21.6 | 21.9 | 21.4 | 20.6 | 19.8 | 20.7 |
| Ash content | [wt%] | 19.67 | 19.66 | 19.64 | 19.90 | 20.14 | 20.07 |
| Flexural Modulus | [N/mm²] | 1727 | 1714 | 1723 | 1780 | 1670 | 1680 |
| Charpy notched impact (23 °C) | [kJ/m²] | 26.5B/2 | 27.9 B/9 | 26.3 B | 26.9 B | 32.1 D | 28.0 B1 |
| | | 32.8 D/8 | 31.0 D/1 | | | | 30.9 D/9 |
| Charpy notched impact (0 °C) | [kJ/m²] | 7.08 B | 6.36 B | 6.16 B | 5.51 B | 7.26 B | 6.76 B |
| Charpy notched impact (-30 °C) | [kJ/m²] | 4.05 B | 3.6 B | 3.14 B | 3.15 B | 3.58 B | 3.33 B |
| C-emission | [µg/g] | 23 | 23 | 23 | 21 | 21 | 21 |
| Long-term heat stability at 150 °C | [h] | 504 | 504 | 528 | 696 | 504 | 672 |
| Odor, Panel 1 | [u.a.] | 4.0 | 3.3 | 3.2 | 2.8 | 3.0 | 3.0 |
| Odor, Panel 2 | [u.a.] | 3.5 | 3.2 | 3.0 | 2.7 | 2.7 | 2.3 |

The formulations comprising talc as a reinforcing filler and 0.50 wt% or 1.00 wt% of β-cyclodextrin (Example 1 and 2), 0.50 wt% or 1.00 wt% of methyl- β-cyclodextrin (Example 3 and 4) and the formulation with 0.50 wt% each of β-cyclodextrin and methylated β-cyclodextrin (Example 5) showed a significant reduction of odor compared to the formulation without cyclodextrins (Comparative Example 1).

### Example 6 - PP composition with glass fibers

The composition was built up with:
- 40.47 wt% of a commercial polypropylene homopolymer (PP homo 2, MFR = 10 g/10 min, LyondellBasell Industries);
- 26.00 wt% of a commercial polypropylene homopolymer (PP homo 3, MFR = 1400 g/10 min, PMC Group);
- 31.00 wt% of 13 micron chopped glass fibers ("GFs," ThermoFlow^{®} EC 13 636 fiberglass, Johns Manville);
- 0.50 wt% of a commercial propylene homopolymer grafted with maleic anhydride (PP-g-MA, Exxelor^{™} PO1020, ExxonMobil);
- 0.50 wt% of β-cyclodextrin (CAVAMAX^{®} W7, Wacker Chemie);
- 1.58 wt% of a standard additive package constituted by 0.20 wt% of magnesium oxide (Magnesium Oxide Remag AC, Spaeter), 0.75 wt% of antioxidants (0.20 wt% of Irgafos^{®} 168, 0.15 wt% of Irganox^{®} 1010 and 0.40 wt% of Irganox^{®} PS 802 FL, BASF), 0.63 wt% of a carbon black masterbatch, 40% by weight polypropylene (BK MB - PP MB, 40% black, Polyplast Müller) with respect to the total amount of the composition.

### Comparative Example 2 - PP composition with glass fibers

The composition of Comparative Example 2 was built up with the same components and amounts as Example 6 except that the commercial polypropylene homopolymer (PP homo 2) concentration was 40.97 wt%, and no cyclodextrins were present.

The compositions of Example 6 and Comparative Example 2 are reported in Table 3.

**Table 3**

| | | Comp Ex 2 | Ex 6 |
|---|---|---|---|
| PP homo 2 | [wt%] | 40.97 | 40.47 |
| PP homo 3 | [wt%] | 26.00 | 26.00 |
| GF | [wt%] | 31.00 | 31.00 |
| PP-g-MA | [wt%] | 0.50 | 0.50 |
| CAWASOL W7 | [wt%] | 0 | 0.50 |
| Additive package | [wt%] | 1.58 | 1.58 |

Properties of Example 6 and Comparative Example 2 are reported in Table 4.

**Table 4**

| | | Comp Ex 2 | Ex 6 |
|---|---|---|---|
| MFR | [g/10 min] | 16.5 | 16.2 |
| MVR | [g/10 min] | 17.6 | 17.3 |
| Ash content | [wt%] | 31.91 | 31.18 |
| Tensile modulus | [N/mm²] | 6929 | 6731 |
| Tensile stress at yield | [N/mm²] | 99.4 | 95.7 |
| Elongation at yield | [%] | 2.6 | 2.7 |
| Tensile strength | [N/mm²] | 98.9 | 95.9 |
| Tensile stress at break | [N/mm²] | 98.9 | 95.3 |
| Elongation at break | [%] | 2.8 | 2.9 |
| Charpy notched impact (23 °C) | [kJ/m²] | 9.97 | 9.51 |
| Charpy unnotched impact (0 °C) | [kJ/m²] | 46.8 | 48.8 |
| C-emission | [µg/g] | 4 | 3 |
| VOC | [ppm] | 28 | 27 |
| VOG | [ppm] | 153 | 146 |
| Long-term heat stability at 150 °C | [h] | 1200 | 1116 |
| Fogging | [mg] | 1.1 | 0.5 |
| Odor, Panel 1 | [u.a.] | 3.7 | 2.7 |
| Odor, Panel 2 | [u.a.] | 3.0 | 2.0 |

The formulation comprising glass fibers as a reinforcing filler and 0.5% by weight of β-cyclodextrin (Example 6) showed a significant reduction of odor and fogging in comparison with the formulation without cyclodextrins (Comparative Example 2).

### Example 7 - PP unfilled composition

The composition was built up with:
- 94.00 wt% of a commercial heterophasic polypropylene (PP heco 3, C₂ content of 9.0 wt%, MFR = 12 g/10 min, LyondellBasell Industries);
- 0.74 wt% of a commercial polypropylene homopolymer (PP homo 4, MFR = 1.2g/10 min, LyondellBasell Industries);
- 0.50 wt% of β-cyclodextrin (CAVAMAX^{®} W7, Wacker Chemie);
- 4.76 wt% of a standard additive package constituted by 1.50 wt% of nucleating talc (HTP1c, IMI Fabi), 0.50 wt% of GMS (Dimodan^{®} HP, DuPont Danisco), 0.10 wt% of HALS stabilizer (Cyasorb^{®} UV-3853 S, Cytec), 0.60 wt% of antioxidants (0.20 wt% of Irgafos^{®} 168 and 0.40 wt% of Irganox^{®} 1010, BASF), 0.20 wt% of nucleating agent (Palmarole MI.NA.08, Akeka Palmarole), 0.20 wt% of magnesium hoxide (Magnesium Oxide Remag AC, Spaeter), 0.44 wt% of pigments (0.12 wt% of YL PI - Sicotan Yellow K2001 FG (BASF), 0.04 wt5 of RD PI - Colortherm Red 110 M (Clariant), and 0.28 wt% of WT PI - Kronos 2220 (Kronos), and 1.22 wt% of a carbon black masterbatch, 40% by weight in polypropylene (BK MB - PP MB 40% black, Polyplast Müller), with respect to the total amount of the composition.

### Example 8 - PP unfilled composition

Composition of Example 8 was built up with the same components and amounts of Example 7 except that that the cyclodextrin used was CAVASOL^{®} W7 M methyl-β-cyclodextrin (Wacker Chemie).

### Comparative example 3 - PP unfilled composition

The composition of Comparative Example 3 was built up with the same components and amounts as Example 7 except that the commercial polypropylene homopolymer (PP homo 3) was 1.24 wt%, and no cyclodextrins were present.

Compositions of Examples 7 and 8 and Comparative Example 3 are reported in Table 5.

**Table 5**

| | | Comp Ex 3 | Ex 7 | Ex 8 |
|---|---|---|---|---|
| PP heco 3 | [wt%] | 94.00 | 94.00 | 94.00 |
| PP homo 4 | [wt%] | 1.24 | 0.74 | 0.74 |
| CAWASOL W7 | [wt%] | 0 | 0.50 | 0 |
| CAWASOL W7 M | [wt%] | 0 | 0 | 0.50 |
| Additive package | [wt%] | 4.76 | 4.76 | 4.76 |

Properties of Examples 7 and 8 and Comparative Example 3 are summoned up in Table 6.

**Table 6**

| | | Comp Ex 2 | Ex 7 | Ex 8 |
|---|---|---|---|---|
| MFR | [g/10 min] | 13.2 | 13.6 | 13.4 |
| MVR | [g/10 min] | 17.9 | 18.3 | 18.1 |
| Ash content | [wt%] | 2.03 | 2.14 | 2.16 |
| Flexural modulus | [N/mm²] | 1431 | 1408 | 1319 |
| Charpy notched impact (23 °C) | [kJ/m²] | 12.11 B | 11.05 B | 13.02 B |
| Charpy notched impact (0 °C) | [kJ/m²] | 6.83 B | 6.48 B | 6.71 B |
| C-emission | [µg/g] | 9 | 8 | 8 |
| VOC | [ppm] | 58 | 51 | 54 |
| VOG | [ppm] | 239 | 237 | 250 |
| Fogging | [mg] | 1.4 | 0.9 | 0.9 |
| Odor, Panel 1 | [u.a.] | 4.3 | 4.2 | 3.7 |

The formulations comprising 0.50 wt% of β-cyclodextrin (Example 7) and 0.50 wt% methyl-β-cyclodextrin (Example 8) showed a significant reduction in odor and fogging in comparison with the formulation without cyclodextrins (Comparative Example 3).

## Claims

1. Polyolefin composition comprising:
(A) at least one polyolefin;
(B) from 3.0 to 40.0% by weight of a filler selected from the group consisting of fibers, metallic flakes, glass flakes, milled glass, glass spheres, mineral fillers, barium sulfate, metal oxides and hydroxides, wood flour and mixtures thereof; and
(C) from 0.1 to 2.5% by weight of at least one cyclodextrin,
the sum (A) + (B) + (C) being 100.

2. Polyolefin composition according to claim 1 comprising:
(A) at least one polyolefin;
(B) from 5.0 to 38.0% by weight of a filler; and
(C) from 0.2 to 2.0% by weight of at least one cyclodextrin,
the sum (A) + (B) + (C) being 100.

3. Polyolefin composition according to claim 1 or 2 wherein component (A) comprises a polypropylene.

4. Polyolefin composition according to any of claims 1-3 wherein the cyclodextrin is β-cyclodextrin, methyl- β-cyclodextrin or a mixture thereof.

5. Polyolefin composition according to any of claims 1-4 wherein the filler (B) is talc.

6. Polyolefin composition according to any of claims 1-4 wherein the filler (B) is glass fibers.

7. Polyolefin composition according to claim 6 further comprising a compatibilizer.

8. Polyolefin composition according to claim 7 wherein the compatibilizer is a propylene polymer grafted with maleic anhydride.

9. A molded article prepared from the composition according with any of claims 1-8.

10. A molded article according to claim 9, being a finished part for use in the automotive industry.

11. Use of the composition according with any of claims 1-8 in an injection molding process.

## Patentansprüche

1. Polyolefinzusammensetzung, umfassend:
(A) mindestens ein Polyolefin;
(B) 3,0 bis 40,0 Gew.% eines Füllstoffs ausgewählt aus der Gruppe bestehend aus Fasern, Metallflocken, Glasflocken, gemahlenem Glas, Glaskugeln, mineralischen Füllstoffen, Bariumsulfat, Metalloxiden und -hydroxiden, Holzmehl und Mischungen davon; und
(C) 0,1 bis 2,5 Gew.% von mindestens einem Cyclodextrin,
wobei die Summe aus (A) + (B) + (C) 100 beträgt.

2. Polyolefinzusammensetzung nach Anspruch 1, umfassend:
(A) mindestens ein Polyolefin;
(B) 5,0 bis 38,0 Gew.% eines Füllstoffs; und
(C) 0,2 bis 2,0 Gew.% von mindestens einem Cyclodextrin,
wobei die Summe aus (A) + (B) + (C) 100 beträgt.

3. Polyolefinzusammensetzung nach einem der Ansprüche 1 bis 2, wobei Komponente (A) ein Polypropylen umfasst.

4. Polyolefinzusammensetzung nach einem der Ansprüche 1 bis 3, wobei das Cyclodextrin β-Cyclodextrin, Methyl-β-cyclodextrin oder eine Mischung davon ist.

5. Polyolefinzusammensetzung nach einem der Ansprüche 1 bis 4, wobei der Füllstoff (B) Talkum ist.

6. Polyolefinzusammensetzung nach einem der Ansprüche 1 bis 4, wobei der Füllstoff (B) Glasfasern ist.

7. Polyolefinzusammensetzung nach Anspruch 6 ferner umfassend einen Verträglichmacher.

8. Polyolefinzusammensetzung nach Anspruch 7, wobei der Verträglichmacher ein mit Maleinsäureanhydrid gepfropftes Propylenpolymer ist.

9. Formartikel, der aus der Zusammensetzung gemäß einem der Ansprüche 1 bis 8 hergestellt ist.

10. Formartikel nach Anspruch 9, der ein fertiges Teil zur Verwendung in der Automobilindustrie ist.

11. Verwendung der Zusammensetzung gemäß einem der Ansprüche 1 bis 8 in einem Spritzgussprozess.

## Revendications

1. Composition polyoléfinique comprenant :
(A) au moins une polyoléfine ;
(B) 3,0 à 40,0 % en poids d'une charge choisie dans le groupe constitué par les fibres, les paillettes métalliques, les paillettes de verre, le verre broyé, les sphères de verre, les charges minérales, le sulfate de baryum, les oxydes et hydroxydes métalliques, la farine de bois et leurs mélanges ; et
(C) 0,1 à 2,5 % en poids d'au moins une cyclodextrine,
la somme (A) + (B) + (C) valant 100.

2. Composition polyoléfinique selon la revendication 1, comprenant :
(A) au moins une polyoléfine ;
(B) 5,0 à 38,0 % en poids d'une charge ; et
(C) 0,2 à 2,0 % en poids d'au moins une cyclodextrine,
la somme (A) + (B) + (C) valant 100.

3. Composition polyoléfinique selon la revendication 1 ou 2, le constituant (A) comprenant un polypropylène.

4. Composition polyoléfinique selon l'une quelconque des revendications 1 à 3, la cyclodextrine étant la β-cyclodextrine, la méthyl-β-cyclodextrine ou un mélange de celles-ci.

5. Composition polyoléfinique selon l'une quelconque des revendications 1 à 4, la charge (B) étant le talc.

6. Composition polyoléfinique selon l'une quelconque des revendications 1 à 4, la charge (B) étant des fibres de verre.

7. Composition polyoléfinique selon la revendication 6, comprenant en outre un agent de compatibilité.

8. Composition polyoléfinique selon la revendication 7, l'agent de compatibilité étant un polymère de propylène greffé par de l'anhydride maléique.

9. Article moulé préparé à partir de la composition selon l'une quelconque des revendications 1 à 8.

10. Article moulé selon la revendication 9, qui est une pièce finie destinée à être utilisée dans l'industrie automobile.

11. Utilisation de la composition selon l'une quelconque des revendications 1 à 8 dans un procédé de moulage par injection.
